# EUROPÄISCHE PATENTSCHRIFT

(11) **EP 2 435 524 B1**
(45) Veröffentlichungstag und Bekanntmachung des Hinweises auf die Patenterteilung: **16.07.2014**
(21) Anmeldenummer: 09768023.5
(22) Anmeldetag: 03.12.2009
(51) Int. Cl.: C09J 7/02

(54) **KLEBEFOLIE ODER KLEBEBAND AUF BASIS VON EPOXIDEN**
ADHESIVE FILM OR ADHESIVE TAPE BASED ON EPOXIDES
PELLICULE D'ADHÉSIF OU BANDE D'ADHÉSIF À BASE D'ÉPOXY

(30) Priorität: 28.05.2009 DE 102009026548
(43) Veröffentlichungstag der Anmeldung: 04.04.2012
(73) Patentinhaber: Henkel AG & Co. KGaA, 40589 Düsseldorf (DE)
(72) Erfinder: BILCAI, Eugen, 85764 Oberschleißheim (DE); BARRIAU, Emilie, Laguna Niguel, CA 92677 (US); RENKEL, Martin, 40215 Düsseldorf (DE); WUCHERPFENNIG, Sven, 41542 Dormagen (DE)
(86) Internationale Anmeldenummer: PCT/EP2009/066346
(87) Internationale Veröffentlichungsnummer: WO 2010/136086

(56) Entgegenhaltungen:
- EP-A- 1 033 393
- WO-A-99/16618
- WO-A-2006/044376
- WO-A-2007/025007
- DE-A1-102006 048 739
- US-A1- 2004 159 969
- US-A1- 2004 228 998
- DATABASE WPI Week 200332 Thomson Scientific, London, GB; AN 2003-342449 XP002563912 & WO 03/018703 A (HITACHI CHEM CO LTD) 6. März 2003 (2003-03-06)

## Beschreibung

Die vorliegende Erfindung betrifft eine biegsame (flexible und dehnbare) Klebefolie auf Basis von reaktiven Epoxiden und entsprechenden Härtern, die thermisch härtbar ist. Sie kann auf einfache Weise manuell um zu fügende Gegenstände gewickelt werden und ist dafür geeignet, Rohre miteinander zu verkleben.

Das Verkleben von Rohren mit einem Klebemittel in Bandform ist beispielsweise aus der deutschen Offenlegungsschrift DE 2538061 A1 bekannt. Demnach wird die Klebefolie um den Endabschnitt des einen Rohres gewickelt, wonach dieser Endabschnitt in einen aufgeweiteten Endabschnitt des anderen Rohres eingesteckt wird. Durch Erwärmen verflüssigt sich zunächst der Klebstoff, füllt den Spalt zwischen den Wänden der beiden Endstücke und härtet anschließend aus. Hierfür wird vorzugsweise ein Epoxid-Klebemittel verwendet, das bei Raumtemperatur fest ist und das ein Geflecht aus ungewebten Dacron-Fäden aufweist.

US 5,274,006 beschreibt ebenfalls ein Klebemittel auf Epoxid-Basis, das beispielsweise als Band mit einer Dicke von 2 mm hergestellt werden kann. Es enthält ein flüssiges Epoxidharz-Präpolymer, einen latenten Härter für das Epoxidharz, ein Treibmittel zum Aufschäumen sowie ein weiteres Polymer ausgewählt aus gummiartigen Elastomeren und thermoplastischen Harzen.

In der WO 00/27920 werden expandierbare Abdichtungs- und Dämpfungszusammensetzungen offenbart, die Mischungen von einem thermoplastischem Harz bzw. mehreren thermoplastischen Harzen und einem Epoxidharz sind. Als Beispiele thermoplastischer Harze werden genannt: Festkautschuke wie Styrol-Butadien-Kautschuke und Nitril-Butadien-Kautschuke oder Polystyrol-Polymere wie beispielsweise SBS-Blockcopolymere. Das Epoxidharz ist vorzugsweise flüssig.

Die deutsche Patentanmeldung DE 102006048739 beschreibt Bindemittel zur Herstellung expandierbarer, thermisch härtbarer Formkörper, die mindestens ein Epoxidharz, mindestens einen bei Raumtemperatur festen Polyester, mindestens ein Treibmittel, mindestens einen Härter und mindestens einen Füllstoff enthalten. Zusätzlich können "Flexibilisierungsmittel" enthalten sein. Als Flexibilisierungsmittel werden beispielsweise Festkautschuke genannt. Beispiele für geeignete Festkautschuke sind Polybutadien, Styrol-Butadien-Kautschuk, Butadien-Acrylnitril-Kautschuk, EPDM, synthetischer oder natürlicher Isoprenkautschuk, Butylkautschuk oder Polyurethankautschuk. Besonders geeignet sind teilvernetzte Festkautschuke auf der Basis von Isopren-Acrylnitril- oder Butadien-Acrylnitril-Copolymeren.

WO 2007/004184 beschreibt ein thermisch aufschäumbares Material, das die folgenden Komponenten enthält: ein festes Epoxidharz, das im Wesentlichen frei ist vom flüssigem oder halbfestem Epoxidharz, einen Schlagzähigkeits-Verbesserer, einen Härter und ein Hitzeaktivierbares Treibmittel. Dabei kann der Schlagzähigkeits-Verbesserer ein thermoplastisches Material darstellen. Beispielsweise werden genannt: Epoxy-Polyurethan-Hybride und Isocyanat-Prepolymere (beispielsweise Isocyanat-terminierte Polyetherpolyole), die eine Molmasse im Bereich zwischen 1000 und 10000 g/mol aufweisen. Weiterhin werden eine Reihe von Block-Copolymere als Schlagzähigkeits-Verbesserer genannt. Diese können eine Kern-Schale-Struktur aufweisen.

WO 2007/025007 offenbart eine Zusammensetzung mit folgenden Komponenten: zumindest ein Epoxidharz, Kautschuk-Partikel mit einer Kern-Schale-Struktur, einen weiteren Schlagzähigkeits-Modifizierer bzw. Zähigkeits-Verbesserer und einen Hitze-aktivierbaren latenten Härter. Zusätzliche kann die Zusammensetzung Treibmittel enthalten, so dass sie als Strukturschaum verwendet werden kann. Als Komponenten c) werden beispielsweise Polyurethane genannt, die sich von Hydroxyl-terminierten Polyoxyalkylenen, wie beispielsweise Polypropylenglycol oder Polytetrahydrofurandiol ableiten. Diese sollten thermoplastisches Verhalten zeigen. Statt dessen oder zusätzlich hierzu können auch Block-Copolymere vorhanden sein, beispielsweise solche, bei denen zumindest ein Polymerblock eine Glastemperatur unterhalb von 20°C (vorzugsweise unterhalb 0°C oder unterhalb -30°C oder unterhalb -50°C) aufweist, beispielsweise ein Polybutadienblock oder ein Polyisoprenblock. Zumindest ein weiterer Block des Block-Copolymers hat eine Glastemperatur oberhalb von 20°C (vorzugsweise oberhalb 50°C oder oberhalb 70°C), beispielsweise ein Polystyrolblock oder ein Polymethylmethacrylatblock. Als konkrete Beispiele genannt werden: Styrol-Butadien-Methylmethacrylat-Block-Copolymere, Methylmethacrylat-Butadien-Methylmethacrylat-Block-Copolymere und Butadien-Methylmethacrylat-Block-Copolymere.

Die nicht vorveröffentlichte deutsche Patentanmeldung DE 10 2008 053518. beschreibt eine thermisch expandier- und härtbare Masse enthaltend
a) mindestens ein Epoxid-Präpolymer,
b) mindestens einen hitzeaktivierbaren Härter für das Präpolymer,
c) mindestens ein Treibmittel,
d) mindestens ein thermoplastisches Polyurethan oder Isocyanat,
e) mindestens ein Block-Copolymer.
   Zusätzlich kann diese Masse als Komponente
f) Kautschuk-Partikel, vorzugsweise solche mit Kern-Schale-Struktur,
   und/oder als Komponente
g) anorganische Partikel
   enthalten, die eine Hülle aus organischen Polymeren aufweisen

Die nicht vorveröffentlichte deutsche Patentanmeldung DE 10 2008 053520 beschreibt eine thermisch expandier- und härtbare Masse enthaltend
a) mindestens ein Epoxid-Präpolymer,
b) mindestens einen hitzeaktivierbaren Härter für das Präpolymer,
c) mindestens ein Treibmittel,
d) mindestens ein thermoplastisches, nicht reaktives Polyurethan, das ausgewählt ist aus Polyurethanen, die eine Polyester-Kette enthalten.

Keine der beiden vorstehend genannten deutschen Patentanmeldungen gibt eine Anregung dafür, die dort beschriebenen Massen in Form einer biegsamen oder aufwickelbaren Folie bereit zu stellen.

Die vorliegende Erfindung stellt sich die Aufgabe, ein thermisch härtbares Klebemittel in Form einer biegsamen oder aufwickelbaren Folie bereitzustellen, das je nach Anwendungszweck thermisch expandierbar ("schäumbar") oder nicht thermisch expandierbar ist. Dabei soll das Klebemittel in ungehärtetem Zustand um mindestens 100 % dehnbar sein, um eine leichte Handhabbarkeit zu gewährleisten. In gehärtetem Zustand soll es nicht spröde sein, sondern eine ausreichende Schlagzähfestigkeit/Flexibilität aufweisen, um bei schlagartiger Belastung nicht zu brechen. Dass es zusätzlich nach dem Aushärten eine gute Haftung aufweisen muss, die sich beispielsweise in hohen Werten der Zugscherfestigkeit ("lap shear strength") äußert, versteht sich von selbst.

Ein Gegenstand der vorliegenden Erfindung ist ein thermisch härtbares Klebemittel in Band- oder Folienform mit einer Dicke im Bereich von 0,1 bis 5 mm zum Verbinden von Rohren, enthaltend
a) mindestens ein reaktives Epoxid-Präpolymer,
b) mindestens einen latenten Härter für Epoxide sowie
c) ein oder mehrere Elastomere,
dadurch gekennzeichnet, dass die Elastomere ausgewählt sind aus: Block-Copolymeren mit thermoplastischen Polymerblöcken ausgewählt aus Copolymeren mit folgendem Blockaufbau: Styrol-Butadien-(Meth)Acrylat,
Styrol-Butadien-(Meth)Acrylsäureester,
Ethylen-(Meth)Acrylsäureester-Glycidyl(meth)acrylsäureester,
Ethylen-(Meth)Acrylsäureester-Maleinsäureanhydrid,
Methylmethacrylat-Butylacrylat-Methylmethacrylat, wobei
als Komponente a) mindestens teilweise ein bei 22 °C festes Epoxidharz mit reaktiven EpoxidGruppen vorliegt.

Die Epoxid-Präpolymere, im folgenden auch als "Epoxidharze" bezeichnet, können grundsätzlich gesättigte, ungesättigte, cyclische oder acyclische, aliphatische, alicyclische, aromatische oder heterocyclische Polyepoxidverbindungen sein.

Geeignete Epoxidharze im Rahmen der vorliegenden Erfindung sind beispielsweise vorzugsweise ausgewählt aus Epoxidharzen vom Bisphenol-A-Typ, Epoxidharzen vom Bisphenol-S-Typ, Epoxidharzen vom Bisphenol-F-Typ, Epoxidharzen vom Phenol-Novolak-Typ, Epoxidharzen vom Cresol-Novolak-Typ, epoxidierten Produkten zahlreicher Dicyclopentadienmodifizierter Phenolharze, erhältlich durch Umsetzung von Dicyclopentadien mit zahlreichen Phenolen, epoxidierte Produkte von 2,2',6,6'-Tetramethylbiphenol, aromatische Epoxidharze wie Epoxidharze mit Naphthalin-Grundgerüst und Epoxidharze mit Fluoren-Grundgerüst, aliphatische Epoxidharze wie Neopentylglykoldiglycidylether und 1,6-Hexandioldiglycidylether, alicyclische Epoxidharze wie 3,4-Epoxycyclohexylmethyl-3,4-epoxycyclohexancarboxylat und Bis(3,4-epoxycyclohexyl)adipat, und Epoxidharze mit einem Heteroring wie Triglycidylisocyanurat.
Insbesondere umfassen die Epoxidharze zum Beispiel das Reaktionsprodukt aus Bisphenol A und Epichlorhydrin, das Reaktionsprodukt aus Phenol und Formaldehyd (Novolak-Harze) und Epichlorhydrin, Glycidyl Ester sowie das Reaktionsprodukt aus Epichlorhydrin und p-Aminophenol.

Weitere Polyphenole, die durch Umsetzung mit Epichlorhydrin (oder Epibromhydrin) geeignete Epoxidharz-Präpolymere liefern, sind: Resorcin, 1,2-Dihydroxybenzol, Hydrochinon, bis(4-hdroxyphenyl)-1,1-isobutan, 4,4'-dihydroxybenzophenon, bis(4-hydroxyphenyl)-1,1-ethan und 1,5-hydroxynaphthalin.

Weitere geeignete Epoxid-Präpolymere sind Polyglycidylether von Polyalkoholen oder Diaminen. Solche Polyglyzidylether leiten sich ab von Polyalkoholen, wie beispielsweise Ethylenglycol, Diethylenglycol, Triethylenglycol, 1,2-Propylenglycol, 1,4-Butylenglycol, Triethylenglycol, 1,5-Pentandiol, 1,6-Hexandiol oder Trimethylolpropan.

Weitere bevorzugte Epoxidharze, die kommerziell erhältlich sind, umfassen insbesondere Octadecylenoxid, Epichlorhydrin, Styroloxid, Vinylcyclohexenoxid, Glycidol, Glycidylmethacrylat, Diglycidylether von Bisphenol A (z.B. diejenigen, welche unter den Handelsbezeichnungen "Epon 828", "Epon 825", "Epon 1004" und "Epon 1010" der Hexion Specialty Chemicals Inc., "DER-331 ", "DER-332", "DER-334", "DER-732" und "DER-736" der Dow Chemical Co. erhältlich sind), Vinylcyclohexendioxid, 3,4-Epoxycyclohexylmethyl-3,4-epoxycyclohexen-carboxylat, 3,4-Epoxy-6-methylcyclohexylmethyl-3,4-epoxy-6-methyl-cyclohexencarboxylat, Bis(3,4-epoxy-6-methylcyclohexylmethyl)adipat, Bis(2,3-epoxy-cyclopentyl)ether, aliphatisches, mit Polypropylenglycol modifiziertes Epoxid, Dipentendioxid, epoxidiertes Polybutadien (z.B. Krasol Produkte von Sartomer), Epoxidfunktionalität enthaltendes Siliconharz, flammhemmende Epoxidharze (z.B. "DER-580", ein bromiertes Epoxidharz vom Bisphenol-Typ, welches von Dow Chemical Co. erhaeltlich ist), 1,4-Butandiol-diglycidylether eines Phenolformaldehyd-Novolaks (z.B. "DEN-431" und "DEN-438" der Dow Chemical Co.), sowie Resorcin-diglycidylether (z.B. "Kopoxite" der Koppers Company Inc.), Bis(3,4-epoxycyclohexyl)adipat, 2-(3,4-Epoxycyclohexyl-5,5-spiro-3,4-epoxy)cyclohexan-meta-dioxan, Vinylcyclohexenmonoxid, 1,2-Epoxyhexadecan, Alkylglycidilether wie z.B. C8-C10-Alkyl-glycidylether (z.B. "HELOXY Modifier 7" der Hexion Specialty Chemicals Inc.), C12-C14-Alkyl-glycidylether (z.B. "HELOXY Modifier 8" der Hexion Specialty Chemicals Inc.), Butylglycidylether (z.B. "HELOXY Modifier 61" der Hexion Specialty Chemicals Inc.), Cresylglycidylether (z.B. "HELOXY Modifier 62" der Hexion Specialty Chemicals Inc.), p-tert.-Butylphenyl-glycidylether (z.B. "HELOXY Modifier 65" der Hexion Specialty Chemicals Inc.), polyfunktionelle Glycidylether wie z.B. Diglycidylether von 1,4-Butandiol (z.B. "HELOXY Modifier 67" der Hexion Specialty Chemicals Inc.), Diglycidylether von Neopentylglycol (z.B. "HELOXY Modifier 68" der Hexion Specialty Chemicals Inc.), Diglycidylether von Cyclohexandimethanol (z.B. "HELOXY Modifier 107" der Hexion Specialty Chemicals Inc.), Trimethylolethan-triglycidilether (z.B. "HELOXY Modifier 44" der Hexion Specialty Chemicals Inc.), Trimethylolpropan-triglycidylether (z.B. "HELOXY Modifier 48" der Hexion Specialty Chemicals Inc.), Polyglycidylether eines aliphatischen Polyols (z.B. "HELOXY Modifier 84" der Hexion Specialty Chemicals Inc.), Polyglycoldiepoxid (z.B. "HELOXY Modifier 32" der Hexion Specialty Chemicals Inc.), Bisphenol F-Epoxide (z. B. "EPN-1138" oder GY-281" der Huntsman Int. LLC), 9,9-Bis-4-(2,3-epoxypropoxy)-phenylfluorenon (z.B. "Epon 1079" der Hexion Specialty Chemicals Inc.).

Weitere bevorzugte kommerziell erhältliche Verbindungen sind z. B. ausgewählt aus Araldite^{™} 6010, Araldit^{™} GY-281^{™}, Araldit^{™} ECN-1273, Araldit^{™} ECN-1280, Araldit^{™} MY-720, RD-2 von der Huntsman Int. LLC; DEN^{™} 432, DEN^{™} 438, DEN^{™} 485 von Dow Chemical Co., Epon^{™} 812, 826, 830, 834, 836, 871, 872,1001, 1031 etc. von Hexion Specialty Chemicals Inc. und HPT^{™} 1071, HPT^{™} 1079 ebenfalls von Hexion Specialty Chemicals Inc., als Novolak-Harze weiterhin beispielsweise Epi-Rez^{™} 5132 von Hexion Specialty Chemicals Inc., ESCN-001 von Sumitomo Chemical, Quatrex 5010 von Dow Chemical Co., RE 305S von Nippon Kayaku, Epiclon^{™} N673 von DaiNipon Ink Chemistry oder Epicote^{™} 152 von Hexion Specialty Chemicals Inc.

Weiterhin können die folgenden Polyepoxide zumindest anteilig mit verwendet werden: Polyglycidylester von Polycarbonsäuren, beispielsweise Umsetzungsprodukte von Glycidol oder Epichlorhydrin mit aliphatischen oder aromatischen Polycarbonsäuren wie Oxalsäure, Bernsteinsäure, Glutarsäure, Terephthalsäure oder Dimerfettsäure.

Das Epoxid-Äquivalent geeigneter Polyepoxide kann zwischen 150 und 50000, vorzugsweise zwischen 170 und 5000, variieren. Beispielsweise ist ein Epoxidharz auf Basis Epichlorhydrin/Bisphenol-A geeignet, das ein Epoxid-Äquivalentgewicht von 475 bis 550 g/eq bzw. einen Epoxidgruppen-Gehalt im Bereich von 1820 bis 2110 mmol/g aufweist. Der nach RPM 108-C bestimmte Erweichungspunkt liegt im Bereich von 75 bis 85°C.

Dabei liegt als Komponente a) mindestens teilweise ein bei 22 °C festes Epoxidharz mit reaktiven Epoxi-Gruppen vor. Für die Einstellung der Flexibilität kann es hilfreich sein, zusätzlich bei 22 °C flüssige oder pastenartige reaktive Epoxidharze vorzusehen.

Als Härter werden thermisch aktivierbare oder latente Härter für das Epoxidharz-Bindemittelsystem eingesetzt. Diese können ausgewählt werden aus den folgenden Verbindungen: Guanidine, substituierte Guanidine, substituierte Harnstoffe, Melaminharze, Guanamin-Derivate, cyclische tertiäre Amine, aromatische Amine und/oder deren Mischungen. Dabei können die Härter sowohl stöchiometrisch mit in die Härtungsreaktion einbezogen sein, sie können jedoch auch katalytisch wirksam sein. Beispiele für substituierte Guanidine sind Methylguanidin, Dimethylguanidin, Trimethylguanidin, Tetramethylguanidin, Methylisobiguanidin, Dimethylisobiguanidin, Tetramethylisobiguanidin, Hexamethylisobiguanidin, Hepamethylisobiguanidin und ganz besonders Cyanoguanidin (Dicyandiamid). Als Vertreter für geeignete Guanamin-Derivate seien alkylierte Benzoguanamin-Harze, Benzoguanamin-Harze oder Methoximethyl-ethoxymethylbenzoguanamin genannt. Bevorzugt ist Dicyandiamid geeignet.

Zusätzlich zu oder anstelle von den vorgenannten Härtern können katalytisch wirksame substituierte Harnstoffe eingesetzt werden. Dies sind insbesondere der p-Chlorphenyl-N,N-dimethylharnstoff (Monuron), 3-Phenyl-1,1-dimethylharnstoff (Fenuron) oder 3,4-Dichlorphenyl-N,N-dimethylharnstoff (Diuron). Prinzipiell können auch katalytisch wirksame tertiäre Acryl- oder Alkyl-Amine, wie beispielsweise das Benzyldimethylamin, Tris(dimethylamino)phenol, Piperidin oder Piperidinderivate eingesetzt werden. Weiterhin können diverse, vorzugsweise feste lmidazolderivate als katalytisch wirksame Beschleuniger eingesetzt werden. Stellvertretend genannt seien 2-Ethyl-2-methylimidazol, N-Butylimidazol, Benzimidazol sowie N-C₁ bis C₁₂-Alkylimidazole oder N-Arylimidazole. Weiterhin eigenen sich Addukte von Aminoverbindungen an Epoxidharze als beschleunigende Zusätze zu den vorgenannten Härtern. Geeignete Aminoverbindungen sind tertiäre aliphatische, aromatische oder cyclische Amine. Geeignete Epoxyverbindungen sind beispielsweise Polyepoxide auf Basis von Glycidylethern des Bisphenols A oder F oder des Resorcins. Konkrete Beispiele für solche Addukte sind Addukte von tertiären Aminen wie 2-Dimethylaminoethanol, N-substituierte Piperazine, N-substituierte Homopiperazine, N-substituierte Aminophenole an Di- oder Polyglycidylether des Bisphenols A oder F oder des Resorcins.

Als Komponente c) enthält das KlebemittelBlock-Copolymere mit thermoplastischen Polymerblöcken. Das Block-Copolymer c wird ausgewählt aus Copolymeren mit folgendem Blockaufbau: Styrol-Butadien-(Meth)Acrylat, Styrol-Butadien-(Meth)Acrylsäureester, Ethylen-(Meth)Acrylsäureester-Glycidyl(meth)acrylsäureester, Ethylen-(Meth)Acrylsäureester-Maleinsäureanhydrid, Methylmethacrylat-Butylacrylat-Methylmethacrylat. Diese werden vorzugsweise ausgewählt aus solchen, die einen ersten Polymerblock mit einer Glasübergangstemperatur von unterhalb 15°C, insbesondere von unterhalb 0°C, und einen zweiten Polymerblock mit einer Glasübergangstemperatur von oberhalb 25°C, insbesondere von oberhalb 50°C enthalten.

Vorstehend wird die Zusammensetzung dieser Block-Copolymere dadurch definiert, dass für jeden Block die Monomer-Einheit angegeben ist. Dies ist so zu verstehen, dass das Block-Copolymer jeweils Polymerblöcke aus den genannten Monomeren enthält. Dabei können bei den einzelnen Polymerblöcken bis zu 20 mol/% der genannten Monomere durch andere CoMonomere ersetzt werden. Insbesondere gilt dies für Blöcke aus Poly-Methylmethacrylat.

Die vorstehend genannten Block-Copolymere entsprechen denjenigen, die auch im Rahmen der WO 2007/025007 eingesetzt werden können. Nähere Ausführungen hierzu und weitere auch im Rahmen der vorliegenden Erfindung geeignete Block-Copolymere können diesem Dokument von S. 25, Z. 21 bis S. 26, Z. 9 entnommen werden. Dort finden sich auch Querverweise auf Dokumente, in denen die Herstellung solcher Block-Copolymere beschrieben ist.

Das Klebemittel kann als weiteres Elastomer ein thermoplastisches, nicht reaktives Polyurethan enthalten. Der Begriff "thermoplastisches Polyurethan", häufig abgekürzt als "TPU", ist dem Fachmann auf dem hier betroffenen Gebiet bekannt. Ein TPU ist ein zumindest im Wesentlichen lineares Polymer, das durch die Polymerisationsreaktion dreier Ausgangskomponenten gebildet wird:
1. ein Diisocyanat,
2. ein kurzkettiges Diol (häufig als "Kettenverlängerer" bezeichnet) der allgemeinen Formel (OH-R-OH), wobei R für einen Kohlenwasserstoff-Rest mit 1 bis 4 C-Atomen steht,
3. ein langkettiges Diol (OH-Z-OH), wobei die Gruppe Z für eine Polymerkette steht, die zu einem so genannten Weichsegment des entstandenen Polyurethans führt. Beispielsweise kann die Gruppe Z eine Polyether- oder Polyesterkette darstellen. Polyetherketten können durch ringöffnende Polymerisation von Alkylenoxiden, wie beispielsweise Ethylenoxid oder Propylenoxid oder durch eine entsprechende Reaktion gesättigter sauerstoffhaltiger Heterozyklen, wie beispielsweise Tetrahydrofuran gebildet werden. Polyesterketten entstehen durch Reaktion zweiwertiger Alkohole mit zweibasischen Carbonsäuren. Eine bevorzugte Polyesterkette besteht aus Polycaprolacton-Polyester.

Bei der Umsetzung dieser drei Komponenten entsteht ein Polyurethan, das abwechselnd Weichsegmente und Hartsegmente enthält. Die Weichsegmente werden dabei durch die Gruppe Z gebildet. Die Hartsegmente entstehen aus dem Diisocyanat und dem kurzkettigen Diol.

Die Polarität der Hartsegmente führt zu einer starken Anziehung zwischen diesen, was wiederum zu einem hohen Aggregations- und Ordnungsgrad in der Festphase des Polymers führt. So entstehen kristalline oder pseudo-kristalline Bereiche, die in der weichen und flexiblen Matrix der Weichsegmente eingebettet sind. Die kristallinen und pseudo-kristallinen Bereiche der Hartsegmente wirken als physikalische Verknüpfung, was dem TPU eine hohe Elastizität verleiht. Die flexiblen Ketten der Weichsegmente tragen zum Dehnungsverhalten des Polymers bei.

Das thermoplastische Polyurethan ist vorzugsweise bei Raumtemperatur (22°C) fest und hat eine Glasübergangstemperatur unterhalb von -20°C, vorzugsweise unterhalb von -25°C. Weiterhin weist das bei Raumtemperatur vorzugsweise feste thermoplastische Polyurethan einen Schmelzbereich oder einen Erweichungsbereich nach Kofler auf, der oberhalb von 100°C, vorzugsweise oberhalb von 115°C beginnt. Geeignete bei Raumtemperatur vorzugsweise feste Polyurethane zeichnen sich weiterhin dadurch aus, dass sie als reine Substanz eine Bruchdehnung von mindestens 300%, vorzugsweise von mindestens 400% aufweisen. Als thermoplastische Polyurethane mit diesen Eigenschaften sind insbesondere solche geeignet, die eine Polycaprolacton-Polyesterkette oder eine Polyesterkette enthalten.

Die gewichtsmittlere Molmasse (Mw) geeigneter Polyurethane, wie sie durch Gelpermeationschromatographie bestimmbar ist, liegt vorzugsweise im Bereich von 50000 g/mol bis 120000 g/mol, insbesondere im Bereich von 55000 g/mol bis 90000 g/mol.

Geeignete thermoplastische Polyurethane, die den vorstehenden Kriterien genügen, sind im Handel erhältlich und können anhand dieser Spezifikationen beispielsweise von der Fa. Merquinsa in Spanien oder der Fa. Danquinsa GmbH in Deutschland bezogen werden.

Zusätzlich zu den vorstehend beschriebenen Komponenten kann das erfindungsgemäße Klebemittel als weitere Komponente
d) Kautschuk-Partikel
enthalten, vorzugsweise solche, die eine Kern-Schale-Struktur aufweisen.

Dabei ist es bevorzugt, dass die Kautschuk-Partikel mit Kern-Schale-Struktur einen Kern aus einem Polymermaterial mit einer Glasübergangstemperatur von unterhalb 0 °C und eine Hülle aus einem Polymermaterial mit einer Glasübergangstemperatur von oberhalb 25 °C aufweisen. Besonders geeignete Kautschuk-Partikel mit Kern-Schale-Struktur können einen Kern aus einem Dien-Homopolymer, einem Dien-Copolymer oder einem Polysiloxan-Elastomer und/oder eine Schale aus einem Alkyl(meth)acrylat-Homopolymer oder -Copolymer aufweisen.

Beispielsweise kann der Kern dieser Kern-Schale-Partikel ein Dienhomopolymer oder Copolymer enthalten, das ausgewählt sein kann aus einem Homopolymer von Butadien oder Isopren, einem Copolymer von Butadien oder Isopren mit einem oder mehreren ethylenisch ungesättigten Monomeren, wie beispielsweise vinylaromatische Monomere, (Meth)acrylnitril, (Meth)acrylaten oder ähnlichen Monomeren. Das Polymer oder Copolymer der Schale kann als Monomere beispielsweise enthalten: (Meth)acrylate, wie insbesondere Methylmethacrylat, vinylaromatische Monomere (beispielsweise Styrol), Vinylcyanide (beispielsweise Acrylnitril), ungesättigte Säuren oder Anhydride (beispielsweise Acrylsäure), (Meth)acrylamide und ähnliche Monomere, die zu Polymeren mit einer geeigneten hohen Glastemperatur führen. Das Polymer oder Copolymer der Schale kann Säuregruppen aufweisen, die durch Metallcarboxylat-Bildung vernetzen können, beispielsweise durch Salzbildung mit zweiwertigen Metallkationen. Weiterhin kann das Polymer oder Copolymer der Schale covalent vernetzt sein, indem man Monomere einsetzt, die zwei oder mehr Doppelbindungen pro Molekül aufweisen.

Als Kern können andere kautschukartige Polymere verwendet werden, wie beispielsweise Polybutylacrylat oder Polysiloxanelastomere, wie beispielsweise Polydimethylsiloxan, insbesondere vernetztes Polydimethylsiloxan.

Typischerweise sind diese Kern-Schale-Partikel so aufgebaut, dass der Kern 50 bis 95 Gew.-% des Kern-Schale-Partikels und die Schale 5 bis 50 Gew.-% dieses Partikels ausmachen.

Vorzugsweise sind diese Kautschukpartikel relativ klein. Beispielsweise kann die durchschnittliche Teilchengröße (wie beispielsweise durch Lichtstreumethoden bestimmbar) im Bereich von etwa 0,03 bis etwa 2 µm, insbesondere im Bereich von etwa 0,05 bis etwa 1 µm liegen. Kleinere Kern-Schale-Partikel können jedoch ebenfalls verwendet werden, beispielsweise solche, deren mittlerer Durchmesser kleiner als etwa 500 nm, insbesondere kleiner als etwa 200 nm ist. Beispielsweise kann die durchschnittliche Teilchengröße im Bereich von etwa 25 bis etwa 200 nm liegen.

Die Herstellung derartiger Kern-Schale-Partikel ist im Stand der Technik bekannt, wie beispielsweise in WO 2007/025007 auf Seite 6, Zeilen 16 bis 21 angegeben ist. Kommerzielle Bezugsquellen derartiger Kern-Schale-Partikel werden in diesem Dokument im letzten Absatz der Seite 6 bis zum ersten Absatz der Seite 7 aufgeführt. Auf diese Bezugsquellen wird hiermit verwiesen. Weiterhin wird auf Herstellverfahren für solche Partikel verwiesen, die in dem genannten Dokument von Seite 7, 2. Absatz bis Seite 8, 1. Absatz beschrieben sind. Für nähere Informationen zu geeigneten Kern-Schale-Partikel wird ebenfalls auf das genannte Dokument WO 2007/025007 verwiesen, das von Seite 8, Zeilen 15 bis Seite 13, Zeile 15 ausführliche Informationen hierzu enthält.

Die selbe Funktion wie die vorstehend genannten Kautschuk-Partikel mit Kern-Schale-Struktur können anorganische Partikel übernehmen, die eine Hülle aus organischen Polymeren aufweisen. Daher ist eine weitere bevorzugte Ausführungsform der vorliegenden Erfindung dadurch gekennzeichnet, dass die erfindungsgemäße Masse als zusätzliche Komponente
e) anorganische Partikel
enthält, die eine Hülle aus organischen Polymeren aufweisen.

In dieser Ausführungsform enthält das erfindungsgemäß Klebemittel anorganische Partikel, die eine Hülle aus organischen Polymeren aufweisen, wobei die organischen Polymere vorzugsweise ausgewählt sind aus Homo- oder Copolymeren von Acrylsäure- und/oder Methacrylsäureester und zu mindestens 30 Gew.-% aus einpolymersiertem Acrylsäure- und/oder Methacrylsäureester bestehen.

Die Acrylsäure- und/oder Methacrylsäureester stellen vorzugsweise Methyl- und/oder Ethylester dar, wobei besonders bevorzugt mindestens ein Anteil der Ester als Methylester vorliegt. Zusätzlich können die Polymere auch unveresterte Acryl- und/oder Methacrylsäure enthalten, was die Anbindung der organischen Polymere an die Oberfläche der anorganischen Partikel verbessern kann. Daher ist es in diesem Fall besonders bevorzugt, wenn die Monomereinheiten aus unveresterter Acryl- und/oder Methacylsäure (nahe) an demjenigen Ende der Polymerkette liegen, das sich an die Oberfläche der anorganischen Partikel bindet.

Dabei ist es bevorzugt, dass die organischen Polymere zu mindestens 80 Gew.-% aus Acrylsäure- und/oder Methacrylsäureester bestehen. Insbesondere können sie zu 90 Gew.-%, 95 Gew-% oder vollständig hieraus bestehen. Sofern die organischen Polymere andere Monomere als diese Acrylsäure- und/oder Methacrylsäureester bzw. unveresterte Acrylsäure- und/oder Methacrylsäure enthalten, sind diese vorzugsweise ausgewählt aus Comonomeren, die Epoxy- Hydroxy- und/oder Carboxyl-Gruppen aufweisen.

Die organischen Polymere der Hülle sind vorzugsweise unvernetzt oder so schwach vernetzt, dass nicht mehr als 5 % an Monomer-Einheiten einer Kette mit Monomer-Einheiten einer anderen Kette vernetzt sind. Dabei kann es vorteilhaft sein, dass die Polymere in der Nähe der Oberfläche der anorganischen Partikel stärker vernetzt sind als weiter außen in der Hülle. Insbesondere ist die Hülle vorzugsweise so aufgebaut, dass mindestens 80 %, insbesondere mindestens 90 % und besonders bevorzugt mindestens 95 % der Polymerketten mit einem Ende an die Oberfläche der anorganischen Partikel angebunden sind.

Die anorganischen Partikel weisen vor dem Aufbringen der Hülle aus organischen Polymeren vorzugsweise eine mittlere Teilchengröße im Bereich von 1 bis 1000, insbesondere im Bereich von 5 bis 30 nm auf. Bekanntermaßen ist die Teilchengröße durch Lichtstreumethoden sowie elektronenmikroskopisch bestimmbar.

Die Hülle aus organischen Polymeren weist eine geringere Dichte auf als die anorganischen Partikel selbst. Vorzugsweise hat die Hülle aus organischen Polymeren eine solche Dicke, dass das Gewichtsverhältnis des anorganischen Kerns zur Hülle aus organischen Polymeren im Bereich von 2 : 1 bis 1 : 5, vorzugsweise im Bereich von 3 : 2 bis 1 : 3 liegt. Dies ist durch die Wahl der Reaktionsbedingungen beim Aufwachsen der Hülle aus organischen Polymeren auf die anorganischen Partikel steuerbar.

Allgemein können die anorganischen Partikel ausgewählt sein aus Metallen, Oxiden, Hydroxiden, Carbonaten, Sulfaten und Phosphaten. Dabei können auch Mischformen aus Oxiden, Hydroxiden und Carbonaten, wie beispielsweise basische Carbonate oder basische Oxide vorliegen. Wählt man anorganische Partikel aus Metallen, so kommen vorzugsweise Eisen, Cobalt, Nickel oder Legierungen in Betracht, die zumindest 50 Gew.-% aus einem dieser Metalle bestehen. Oxide, Hydroxide oder Mischformen hiervon sind vorzugsweise ausgewählt aus solchen von Silicium, Cer, Cobalt, Chrom, Nickel, Zink, Titan, Eisen, Yttrium, Zirkonium und/oder Aluminium. Auch hiervon sind Mischformen möglich, wie beispielsweise Partikel aus Alumosilikaten oder aus silikatischen Gläsern. Besonders bevorzugt sind Zinkoxid, Aluminiumoxide oder -hydroxide sowie SiO₂ bzw. die als "Kleselsäure" oder angelsächsisch als "silica" bezeichneten Oxidformen des Siliciums. Weiterhin können die anorganischen Partikel aus Carbonaten, wie beispielsweise Calciumcarbonat, oder aus Sulfaten, wie beispielsweise Bariumsulfat, bestehen. Selbstverständlich ist es auch möglich, dass Partikel mit unterschiedlich zusammengesetzten anorganischen Kernen nebeneinander vorliegen.

Zur Herstellung der anorganischen Partikel, die eine Hülle aus organischen Polymeren aufweisen, kann man beispielsweise so verfahren, wie es in der WO 2004/111136 A1 am Beispiel der Belegung von Zinkoxid mit Alkylenethercarbonsäuren beschrieben ist. Gemäß dieser Verfahrensweise suspendiert man die unbehandelten anorganischen Partikel in einem unpolaren oder wenig polaren Lösungsmittel, gibt danach monomere oder präpolymere Bestandteile der Hülle zu, entfernt das Lösungsmittel und startet die Polymerisation, beispielsweise radikalisch oder fotochemisch. Weiterhin kann man analog der in EP 1 469 020 A1 beschriebenen Herstellungsweise verfahren, wobei man als organische Beschichtungskomponente für die Partikel Monomere oder Präpolymere des Hüllmaterials einsetzt. Weiterhin ist eine Herstellung der umhüllten Partikel durch "atom transfer radical polymerization" möglich, wie es beispielhaft für die Polymerisation von n-Butylacrylat auf Kieselsäure-Nanopartikel beschrieben wurde in: G. Carrot, S. Diamanti, M. Manuszak, B. Charleux, J.-P. Vairon: "Atom Transfer Radical Polymerization of n-Butyl Acrylate from Silica Nanoparticles", J. Polym. Sci., Part A: Polymer Chemistry, Vol. 39, 4294-4301 (2001).

Weiterhin kann auf Herstellverfahren zurückgegriffen werden, wie sie in der WO 2006/053640 beschrieben sind. Für die vorliegende Erfindung sind dabei anorganische Kerne auszuwählen, wie sie in WO 2006/053640 von Seite 5, Zeile 24, bis Seite 7, Zeile 15, mit ihren Herstellverfahren beschrieben sind. Die Beschichtung dieser Kerne erfolgt analog wie in diesem Dokument von S. 10, Zeile 22, bis S 15, Zeile 7 beschrieben. Dabei kann auch dem Vorschlag dieses Dokuments gefolgt werden (Seite 15, Zeilen 9 bis 24), die anorganischen Kerne vor der Aufpolymerisation des Mantels einer Vorbehandlung zu unterziehen. Hierzu heißt es an der genannten Stelle:

"Insbesondere beim Einsatz anorganischer Kerne kann es auch bevorzugt sein, dass der Kern vor der Aufpolymerisation des Mantels einer Vorbehandlung unterzogen wird, die ein Anbinden des Mantels ermöglicht. Dies kann üblicherweise in einer chemischen Funktionalisierung der Partikeloberfläche bestehen, wie sie für die verschiedensten anorganischen Materialen aus der Literatur bekannt ist. Insbesondere bevorzugt kann es dabei sein, auf der Oberfläche solche chemischen Funktionen anzubringen, die als reaktives Kettenende eine Aufpfropfung der Mantelpolymere ermöglichen. Hier sind als Beispiele insbesondere endständige Doppelbindungen, Epoxy-Funktionen, sowie polykondensierbare Gruppen zu nennen. Die Funktionalisierung von Hydroxygruppen-tragenden Oberflächen mit Polymeren ist beispielsweise aus EP-A-337 144 bekannt".

Das erfindungsgemäße Klebemittel kann entweder nur die genannten Kautschuk-Partikel oder nur die genannten umhüllten anorganischen Partikel oder beide Partikelsorten gleichzeitig enthalten.

Beim Verbinden von Rohren, die vor dem Verkleben mechanisch zusammengefügt, beispielsweise ineinander gesteckt werden, kann es zweckmäßig sein, dass das Klebemittel thermisch expandierbar ist, um Hohl- oder Zwischenräume zwischen den Fügeteilen auszufüllen. Für derartige Anwendungen ist es bevorzugt, dass das Klebemittel zusätzlich
f) mindestens ein Treibmittel
enthält.

Als Treibmittel eignen sich im Prinzip alle bekannten Treibmittel wie z. B. die "chemischen Treibmittel" die durch Zersetzung Gase freisetzen, oder "physikalische Treibmittel", d.h. expandierende Hohlkugeln. Beispiele für die erstgenannten Treibmittel sind Azobisisobutyronitril, Azodicarbonamid, Di-Nitrosopentamethylentetramin, 4,4'-Oxybis-(benzolsulfonsäurehydrazid), Diphenylsulfon-3,3'-disulfohydrazid, Benzol-1,3-disulfohydrazid, p-Toluolsulfonylsemicarbazid. Besonders bevorzugt werden die expandierbaren Kunststoffmikrohohlkugeln auf der Basis von Polyvinylidenchloridcopolymeren oder Acrylnitril/(Meth)acrylat-Copolymeren. Diese sind z.B. unter dem Namen "Dualite®" bzw. "Expancel®" von den Firmen Pierce & Stevens bzw. Casco Nobel im Handel erhältlich.

Die Menge an Treibmittel wählt man vorzugsweise so, dass sich das Volumen der Masse beim Erwärmen auf Aktivierungstemperatur (oder Expansionstemperatur) um mindestens 1 %, vorzugsweise mindestens 5 % und insbesondere mindestens 10 % irreversibel vergrößert. Hierunter ist zu verstehen, dass die Masse zusätzlich zur normalen und reversiblen thermischen Ausdehnung gemäß ihrem thermischen Ausdehnungskoeffizienten ihr Volumen im Vergleich zum Ausgangsvolumen bei Raumtemperatur (22 °C) beim Erwärmen auf die Aktivierungstemperatur irreversibel derart vergrößert, dass es nach dem Wiederabkühlen auf Raumtemperatur um mindestens 1 %, vorzugsweise um mindestens 5 % und insbesondere mindestens 10 % größer ist als zuvor. Der angegebene Expansionsgrad bezieht sich also auf das Volumen der Masse bei Raumtemperatur vor und nach dem vorübergehenden Erhitzen auf die Aktivierungstemperatur. Die Obergrenze des Expansionsgrads, also der irreversiblen Volumenvergrößerung, kann man durch die Wahl der Menge des Treibmittels so einstellen, dass sie unter 300 %, insbesondere unter 200 % liegt.

Durch einen Zusatz von gut Wärme leitenden Partikeln wie beispielsweise Metallpulver (was Pulver aus Metalllegierungen einschließt) kann die Wärmeleitung in dem Klebemittel und damit sein Aushärtungsverhalten verbessert werden. Daher besteht eine Ausführungsform des erfindungsgemäßen Klebemittels darin, dass es zusätzlich
g) Metallpulver
enthält. Geeignete Metallpulver können ausgewählt werden aus Pulvern aus Eisen (insbesondere Stahl), Aluminium, Zink, Kupfer oder Legierungen, die mindestens 50 Gew.-% eines dieser Elemente enthalten. Vorzugsweise setzt man Metallpulver ein, bei dem 90 Gew.-% der Partikel eine durch Siebanalyse bestimmbare Teilchengröße im Bereich von 10 bis 100 µm aufweisen.

In der Regel enthalten die erfindungsgemäßen Klebemittel weiterhin an sich bekannte Füllstoffe wie zum Beispiel die diversen gemahlenen oder gefällten Kreiden, Ruß, Calcium-Magnesiumcarbonate, Talkum, Schwerspat, Kieselsäuren oder Silica sowie insbesondere silikatische Füllstoffe vom Typ des Aluminium-Magnesium-Calcium-Silicats, z. B. Wollastonit, Chlorit.

Zur Gewichtsreduzierung kann das Klebemittel zusätzlich zu den vorgenannten "normalen" Füllstoffen sog. Leichtfüllstoffe enthalten. Diese können ausgewählt werden aus der Gruppe der Metallhohlkugeln wie z. B. Stahlhohlkugeln, Glashohlkugeln, Flugasche (Fillite), Kunststoffhohlkugeln auf der Basis von Phenolharzen, Epoxidharzen oder Polyestern, expandierte Microhohlkugeln mit Wandmaterial aus (Meth)acrylsäureester-Copolymeren, Polystyrol, Styrol(meth)acrylat-Copolymeren sowie insbesondere aus Polyvinylidenchlorid sowie Copolymeren des Vinylidenchlorids mit Acrylnitril und/oder (Meth)acrylsäureestern, keramische Hohlkugeln oder organische Leichtfüllstoffe natürlichen Ursprungs wie gemahlene Nussschalen, beispielsweise die Schalen von Cashewnüssen, Kokosnüssen oder Erdnussschalen sowie Korkmehl oder Kokspulver. Besonders bevorzugt werden dabei solche Leichtfüllstoffe auf der Basis von Mikrohohlkugeln, die in dem ausgehärteten Klebemittel eine hohe Druckfestigkeit gewährleisten.

In einer möglichen Ausführungsform enthält das Klebemittel zusätzlich Fasern, beispielsweise auf der Basis von Aramidfasern, Kohlenstoff-Fasern, Metallfasern - z.B. aus Aluminium -, Glasfasern, Polyamidfasern, Polyethylenfasern oder Polyesterfasern, wobei diese Fasern vorzugsweise Pulpfasern oder Stapelfasern sind, die eine Faserlänge zwischen 0,5 und 6 mm haben und einen Durchmesser von 5 bis 20 µm. Besonders bevorzugt sind hierbei Polyamidfasern vom Typ der Aramidfaser oder auch Polyesterfasern.

Weiterhin können die erfindungsgemäßen härtbaren Massen gängige weitere Hilfs- und Zusatzmittel wie z. B. Weichmacher, Rheologie-Hilfsmittel, Netzmittel, Haftvermittler, Alterungsschutzmittel, Stabilisatoren und/oder Farbpigmente enthalten.

Vorzugsweise enthält das Klebemittel die einzelnen Komponenten in den nachstehenden Mengenbereichen. Die Mengenangaben verstehen sich als Gewichts-Prozent in Bezug auf das komplette Klebemittel, wobei die Mengen so zu wählen sind, dass sich insgesamt 100 Gew-% ergeben:
a) Reaktives Epoxid-Präpolymer: mindestens 20, vorzugsweise mindestens 30 Gew.-%, und bis zu 80, vorzugsweise bis zu 70 und insbesondere bis zu 60 Gew.-%. Dabei ist entweder der gesamte Anteil an Epoxid-Präpolymer bei 22 °C fest, oder man verwendet eine Mischung von reaktiven Epoxid-Präpolymeren, wobei ein Teil der Epoxid-Präpolymere bei 22 °C fest und ein anderer Teil der Epoxid-Präpolymere bei 22 °C flüssig oder pastös ist. (Pastös bedeutet, dass sich die Masse zu einem Film verstreichen lässt.) Durch das Mischungsverhältnis von bei 22 °C festen und flüssigen Epoxid-Präpolymeren kann man einstellen, ob das Klebemittel bei 22 °C klebrig ist oder nicht: Je weniger flüssiges Epoxid-Präpolymer eingesetzt wird, desto geringer ist die Klebrigkeit. Beispielsweise kann das Mengenverhältnis zwischen bei 22 °C festen und bei 22 °C flüssigen oder pastösen Epoxid-Präpolymeren im Bereich von 10 : 1 bis 1 : 10 liegen.
b) Latenter Härter für Epoxide: mindestens 1, vorzugsweise mindestens 2 Gew.-%, und bis zu 10, vorzugsweise bis zu 8 Gew.-%. Dabei kann zusätzlich ein Härtungsbeschleuniger vorgesehen werden. Falls dies erwünscht ist, kann dieser in einer Menge im Bereich von mindestens 0,1, vorzugsweise mindestens 0,5 Gew.-%, und bis zu 6 Gew.-%, vorzugsweise bis zu 5 und insbesondere bis zu 3 Gew.-% vorliegen.
c) Ein oder mehrere Elastomere, ausgewählt aus Block-Copolymeren mit thermoplastischen Polymerblöcken: insgesamt mindestens 1, vorzugsweise mindestens 5 und insbesondere mindestens 10 Gew.-%, und bis zu 70, vorzugsweise bis zu 50 Gew.-%. Die Komponente c) kann in Kombination mit c1) thermoplastischen Polurethanen und/oder c2) thermoplastischen Isocyanaten vorliegen. In diesem Fall liegt die Komponente c1) und/oder c2) insgesamt zu mindestens 1, vorzugsweise mindestens 5 Gew.-%, und bis zu 35, vorzugsweise bis zu 25 Gew.-% vor und die Komponente c) zu mindestens 1 Gew.-% und bis zu 35 Gew.-%, vorzugsweise bis zu 25 Gew.-%. Zusätzlich zu diesen Elastomeren kann das Klebemittel weitere Polymere und Copolymere mit Elastomereigenschaften oder Kautschuk-Partikel d), vorzugsweise mit Kern-Schal Struktur, enthalten, beispielsweise Copolymere aus Dienen (wie Butadien, Isopren) und (Meth)acrylsäure oder deren Ester. Diese können in Mengenanteilen (bezogen auf das gesamte Klebemittel) von bis zu 20 Gew.-% und insbesondere bis zu 10 Gew.-%, und vorzugsweise von mehr als 1 Gew.-%, insbesondere von mehr als 4 Gew.-% vorliegen.
e) anorganische Partikel, die eine Schale aus organischen Polymeren aufweisen: nicht zwingend erforderlich. Falls vorhanden: vorzugsweise insgesamt mindestens 5, vorzugsweise mindestens 10 Gew.-%, und bis zu 45, vorzugsweise bis zu 35 und insbesondere bis zu 25 Gew.-%. Mengen zwischen 0 und 5 Gew.-% sind ebenfalls möglich.
f) Treibmittel: nicht erforderlich, wenn das Klebemittel nicht thermisch expandierbar sein soll. Wird ein thermisch expandierbares Klebemittel gewünscht, hängt der erforderliche Anteil an Treibmittel vom angestrebten Expansionsgrad ab und kann empirisch ermittelt werden. Als Anhaltspunkt kann ein Treibmittel-Gehalt im Bereich von 0,2 bis 1,5 Gew.-% dienen. Es sind jedoch auch Treibmittel-Gehalte bis zu 5 und bis zu 10 Gew.-% möglich.
g) Metallpulver: nicht zwingend erforderlich. Falls vorhanden: vorzugsweise mindestens 0,1, insbesondere mindestens 5 Gew.-%, und bis zu 40, vorzugsweise bis zu 25 Gew.-%.

Weitere Hilfsstoffe wie Füllstoffe und Farbpigmente: null bis insgesamt 60, vorzugsweise bis insgesamt 40 Gew.-%, insbesondere bis insgesamt 20 Gew.-%, und vorzugsweise mindestens 5, insbesondere mindestens 10 Gew.-%

Das vorstehend beschriebene Klebemittel kann je nach Anwendungszweck so ausgestaltet sein, dass es bei Raumtemperatur (22 °C) klebrig ist oder nicht. Wie weiter oben erläutert, lässt sich dies insbesondere durch das Mengenverhältnis von flüssigen und festen Epoxid-Präpolymeren einstellen.

Aufgrund der erfindungsgemäßen Rohstoffkombination ist das Klebemittel in Band- oder Folienform in ungehärtetem Zustand bei Raumtemperatur (22 °C) biegsam (d.h. es kann mit der Hand problemlos um 90 ° oder mehr umgebogen werden) oder sogar aufwickelbar (d.h. es kann mit der Hand zu einer Rolle aufgerollt werden, ohne dass hierbei ein innerer Hohlraum entstehen muss). Es lässt sich in ungehärtetem Zustand bei 22 °C zu mindestens 100 % dehnen, bevor es reißt. Daher kann es den unterschiedlichen Substratgeometrien angepasst und insbesondere um zylindrische Körper gewickelt werden.

Zur leichteren Handhabung kann das Klebemittel in Band- oder Folienform auf einer Unterlage, beispielsweise einer Trägerfolie, aufgezogen sein. Hierfür eignet sich beispielsweise eine Trägerfolie aus Metall, beispielsweise aus Aluminium. Je nach Anwendungszweck kann diese Folie eine unterschiedliche Steifigkeit aufweisen, die zwischen fest und leicht biegbar liegen kann. Dabei wird unter einer Trägerfolie eine Unterlage verstranden, die nach dem Aushärten auf dem Klebemittel verbleibt. Unabhängig hiervon ist es zur leichteren Hanfhabung vorzuziehen, dass das Klebemittel ein- oder beidseitig mit einer abziehbaren Folie wie beispielsweise einem Release-Papier (z.B. siliconisiertes Papier) bedeckt ist, die vor der Anwendung bzw. vor dem Aushärten abgezogen wird. Es sind auch Ausführungsformen möglich, bei denen das in Band- oder Folienform ausgebrachte Klebemittel auf der einen Seite mit einer Folie, beispielsweise einer Metallfolie, und auf der anderen Seite mit einem Release-Papier bedeckt ist. Dies ist insbesondere dann der Fall, wenn das Klebemittel bei Raumtemperatur klebrig eingestellt ist.

Zur Herstellung des erfindungsgemäßen Klebemittels vermischt man die einzelnen Komponenten miteinander, vorzugsweise bei einer Temperatur im Bereich von 50 bis 120°C. (je nach Prozessschritt). Sofern dies in einem Rührkessel oder Kneter geschieht, kann man die Mischung anschließend auf eine Unterlage wie beispielsweise ein Release-Papier ausgießen und zu einem Band bzw. einer Folie ausstreichen oder auswalzen. Alternativ hierzu kann man die Komponenten in einer Mischkammer eines Extruders vermischen und danach durch ein entsprechend geformtes Mundstück in Form eines Bandes extrudieren, erwünschtenfalls ebenfalls auf ein Release-Papier. Anstelle des Release-Papiers kann in beiden Fällen eine Trägerfolie wie beispielsweise eine Metallfolie verwendet werden.

Zum Fügen von Gegenständen wird das Klebemittel auf zwei nebeneinander zu fügende Oberflächen ein- oder beidseitig aufgebracht oder zwischen die zu fügenden Oberflächen eingelegt. Sofern das Klebemittel bei Raumtemperatur klebrig ist, wird hierdurch bereits eine Anfangsfixierung erreicht. Zum Aushärten erwärmt man die Fügeteile mit dem Klebemittel auf eine Temperatur im Bereich von etwa 60 bis etwa 200°C, insbesondere zwischen 100 und 180°C. Die Dauer des Erwärmens kann zwischen etwa 1 und 120 Minuten, vorzugsweise zwischen etwa 5 und etwa 45 Minuten liegen. Sofern das Klebemittel Treibmittel enthält, wird es gleichzeitig mit dem Aushärten expandiert.

Das Klebemittel ist also generell zum Verkleben von rohrförmigen oder zylindrischen Bauteilen geeignet. Diese Bauteile können aus unterschiedlichen Materialien gefertigt sein, beispielsweise aus Metall, Holz, Keramik oder Feritten. Dabei können die zu fügenden Teile unterschiedlichen Materialgruppen angehören.

Insbesondere ist das Klebemittel zum Verbinden von Rohren geeignet. Daher betrifft die vorliegende Erfindung auch ein Verfahren zum Verbinden von Rohren, wobei ein erstes Rohr einen Endabschnitt aufweist, in dem ein Endabschnitt eines zweiten Rohrs aufnehmbar ist, wobei man auf den Endabschnitt des zweiten Rohrs einen Klebefilm aufbringt, den Endabschnitt des zweiten Rohrs mit dem aufgebrachten Klebefilm in den Endabschnitt des ersten Rohrs einführt und den Klebefilm durch Erhitzen aushärtet.

Bei dieser und ähnlichen Anwendungen kann man so verfahren, dass man die ineinander gefügten Rohrenden mit einer (vorzugsweise elektrisch) beheizbaren Klemme gegeneinander fixiert, die Heizeinrichtung der Klemme aktiviert und hierdurch die ineinander gefügten Endabschnitte der Rohre derart erwärmt, dass das Klebemittel aushärtet. Anstelle der beheizbaren Klemme kann man auch eine beheizbare Manschette oder ähnliches um die ineinander gefügten Endabschnitte der Rohre oder ähnlicher Teile anbringen und hiermit die ineinander gefügten Endabschnitte erwärmen. Je nach Art der Fügeteitle ist natürlich auch ein Erwärmen in einem Heizofen möglich.

### Beispiele

Die Rohstoffe 1 bis 7 gemäß nachstehender.Tabelle wurden bei einer Temperatur von 120°C in einem Planetenmischer miteinander vermischt. Die weiteren Prozessschritte erfolgen bei einer Temperatur von max 60°C.

Mittels einer beheizbaren Presse wird das Material zu Bändern mit einer Dicke von 0,2 mm geformt.

### Mengenangaben in Gew.-%

| | | Beispiel 1 | Beispiel 2 |
|---|---|---|---|
| 1 | Bei 22 °C festes Epoxidharz (Epon™ 1001) | 28,80% | 28,90% |
| 2 | Bei 22 °C flüssiges Epoxidharz | 21,6% | 21,7% |
| 3 | Butadien-Acrylic-Copolymer | 7,2% | 7,2% |
| 4 | Thermoplastisches Polyurethan (Pearlcoat™ 125K) | 14,40% | 14,40% |
| 5 | CaCO3 | 10,50% | 10,60% |
| 6 | Aluminium Pulver | 9,60% | 0,00% |
| 7 | Beschichtetes Aluminium Pulver | 0, 00% | 9,60% |
| 8 | Dicyandiamid | 4,00% | 4,00% |
| 9 | Beschleuniger (Ajicure™ AH30) | 1,90% | 1,90% |
| 10 | Expandierbare Mikrohohlkugeln | 0,80% | 0,50% |
| 11 | Pyrogene Kieselsäure | 1,00% | 1,00% |
| 12 | Farbpigment (Ruß) | 0,20% | 0,20% |

### Schäumverhalten

| | Beispiel 1 | Beispiel 2 |
|---|---|---|
| Härtungsbedingungen: | 150°C - 37 Minuten | |
| Dichte [g/cm³] (vor Härtung) | 1,26 | 1,25 |
| Expansionsrate [%] (offener Raum) | 60% | 40% |
| Dichte nach Härtung [g/cm³] | 0,79 | 0,89 |

### Prüfergebnisse:

| Lap Shear Strength (LSS) - 10mm Überlappung | | | |
|---|---|---|---|
| - Versuchsgeschwindigkeit 20mm/min | | Beispiel 1 | Beispiel 2 |
| I. | Härtung: | 180°C - 10 Minuten | |
| Substrat: | Kaltgewalzter Stahl (CRS) DC 05 (1,5mm) | | |
| | LSS (MPa) | 22,6 | 26,0 |
| Substrat: | Aluminium AC170 (0,8mm) | | |
| | LSS (MPa) | 17,1 | 18,9 |
| | | | |
| II. | Härtung: | 150°C - 5 Minuten | |
| Substrat: | CRS DC 05 (1,5mm) | | |
| | LSS (MPa) | 8,2 | 9,9 |

Klebefläche 25*10mm und Klebschichtdicke 0,2mm

In allen Fällen wurde 100 % Kohäsionsbruch festgestellt.

## Patentansprüche

1. Thermisch härtbares Klebemittel in Band- oder Folienform mit einer Dicke im Bereich von 0,1 bis 5 mm zum Verbinden von Rohren, enthaltend
a) mindestens ein reaktives Epoxid-Präpolymer,
b) mindestens einen latenten Härter für Epoxide sowie
c) ein oder mehrere Elastomere,
**dadurch gekennzeichnet, dass** die Elastomere ausgewählt sind aus:
Block-Copolymeren mit thermoplastischen Polymerblöcken ausgewählt aus Copolymeren mit folgendem Blockaufbau:
Styrol-Butadien-(Meth)Acrylat,
Styrol-Butadien-(Meth)Acrylsäureester,
Ethylen-(Meth)Acrylsäureester-Glycidyl(meth)acrylsäureester,
Ethylen-(Meth)Acrylsäureester-Maleinsäureanhydrid,
Methylmethacrylat-Butylacrylat-Methylmethacrylat, wobei
als Komponente a) mindestens teilweise ein bei 22 °C festes Epoxidharz mit reaktiven Epoxid-Gruppen vorliegt.

2. Klebemittel nach Anspruch 1, **dadurch gekennzeichnet, dass** es als weiteres Elastomer ein thermoplastisches, nicht reaktives Polyurethan enthält.

3. Klebemittel nach Anspruch 2, **dadurch gekennzeichnet, dass** das thermoplastische, nicht reaktive Polyurethan mindestens einer der folgenden bedingungen genügt:
i) es ist bei 22 °C fest und weist eine Glastemperatur unterhalb von -20 °C, vorzugsweise unterhalb von -25 °C auf;
ii) es ist bei 22 °C fest und weist einen Schmelzbereich oder einen Erweichungsbereich nach Kofler auf, der oberhalb von 100 °C, vorzugsweise oberhalb von 115 °C beginnt;
iii) es ist bei 22 °C fest und weist als reine Substanz eine Bruchdehnung von mindestens 300 %, vorzugsweise von mindestens 400 % auf.

4. Klebemittel nach einem oder mehreren der Ansprüche 1 bis 3, **dadurch gekennzeichnet, dass** es als Block-Copolymer mit thermoplastischen Polymerblöcken ein Block-Copolymer enthält, das ausgewählt ist aus solchen, die einen ersten Polymerblock mit einer Glasübergangstemperatur von unterhalb 15 °C und einen zweiten Polymerblock mit einer Glasübergangstemperatur von oberhalb 25 °C enthalten.

5. Klebemittel nach einem oder mehreren der Ansprüche 1 bis 4, **dadurch gekennzeichnet, dass** es zusätzlich
d) Kautschuk-Partikel
enthält.

6. Klebemittel nach einem oder mehreren der Ansprüche 1 bis 5, **dadurch gekennzeichnet, dass** es zusätzlich
e) anorganische Partikel
enthält, die eine Schale aus organischen Polymeren aufweisen.

7. Klebemittel nach einem oder mehreren der Ansprüche 1 bis 6, **dadurch gekennzeichnet, dass** es zusätzlich
f) mindestens ein Treibmittel
enthält

8. Klebemittel nach einem oder mehreren der Ansprüche 1 bis 7, **dadurch gekennzeichnet, dass** es zusätzlich
g) Metallpulver
enthält.

9. Klebemittel nach einem oder mehreren der Ansprüche 1 bis 8, **dadurch gekennzeichnet, dass** es in ungehärtetem Zustand bei 22 °C biegsam oder aufwickelbar ist und sich zu mindestens 100 % dehnen lässt, bevor es reißt.

10. Klebemittel nach einem oder mehreren der Ansprüche 1 bis 9, **dadurch gekennzeichnet, dass** es auf einer Unterlage, vorzugsweise aus Metall, aufgezogen ist.

11. Verwendung eines Klebemittels nach einem oder mehreren der Ansprüche 1 bis 10 zum Verkleben von rohrförmigen Bauteilen, vorzugsweise Bauteile aus Metall, Holz, Keramik oder Ferriten.

12. Verfahren zum Verbinden von Rohren, wobei ein erstes Rohr einen Endabschnitt aufweist, in dem ein Endabschnitt eines zweiten Rohrs aufnehmbar ist, wobei man auf den Endabschnitt des zweiten Rohrs einen Klebefilm aufbringt, den Endabschnitt des zweiten Rohrs mit dem aufgebrachten Klebefilm in den Endabschnitt des ersten Rohrs einführt und den Klebefilm durch Erhitzen aushärtet, **dadurch gekennzeichnet, dass** man als Klebefilm ein Klebemittel nach einem oder mehreren der Ansprüche 1 bis 11 verwendet.

## Claims

1. A thermally curable adhesive in strip or film form, having a thickness in the range from 0.1 to 5 mm, for connecting pipes, containing
a) at least one reactive epoxy prepolymer,
b) at least one latent hardener for epoxies, and
c) one or more elastomers,
**characterized in that** the elastomers are selected from block copolymers having thermoplastic polymer blocks, selected from copolymers having the following block structure:
styrene-butadiene-(meth)acrylate,
styrene-butadiene-(meth)acrylic acid ester,
ethylene-(meth)acrylic acid ester-glycidyl (meth)acrylic acid ester,
ethylene-(meth)acrylic acid ester-maleic acid anhydride,
methyl methacrylate-butyl acrylate-methyl methacrylate, wherein
there is present as component a) at least partially an epoxy resin having reactive epoxy groups that is solid at 22°C.

2. The adhesive according to Claim 1, **characterized in that** it contains a thermoplastic nonreactive polyurethane as a further elastomer.

3. The adhesive according to Claim 2, **characterized in that** the thermoplastic nonreactive polyurethane satisfies at least one of the following conditions:
i) it is solid at 22°C and has a glass transition temperature below -20°C, preferably below -25°C;
ii) it is solid at 22°C and has a melting range or softening range (per Kofler) that begins above 100°C, preferably above 115°C;
iii) it is solid at 22°C and has, as a pure substance, an elongation at fracture of at least 300%, preferably at least 400%.

4. The adhesive according to one or more of Claims 1 to 3, **characterized in that** it contains as a block copolymer having thermoplastic polymer blocks a block copolymer that is selected from those which contain a first polymer block having a glass transition temperature below 15°C and a second polymer block having a glass transition temperature above 25°C.

5. The adhesive according to one or more of Claims 1 to 4, **characterized in that** it additionally contains
d) rubber particles.

6. The adhesive according to one or more of Claims 1 to 5, **characterized in that** it additionally contains
e) inorganic particles
that comprise a shell made of organic polymers.

7. The adhesive according to one or more of Claims 1 to 6, **characterized in that** it additionally contains
f) at least one blowing agent.

8. The adhesive according to one or more of Claims 1 to 7, **characterized in that** it additionally contains
g) metal powder.

9. The adhesive according to one or more of Claims 1 to 8, **characterized in that** in the uncured state at 22°C it is bendable or spoolable and can be elongated at least 100% before it tears.

10. The adhesive according to one or more of Claims 1 to 9, **characterized in that** it is taken up on a substrate, preferably made of metal.

11. Use of an adhesive according to one or more of Claims 1 to 10 for the adhesive bonding of tubular components, preferably components made of metal, wood, ceramic or ferrites.

12. A method for connecting tubes, wherein a first tube has an end portion in which an end portion of a second tube is receivable, wherein an adhesive film is applied onto the end portion of the second tube, the end portion of the second tube having the applied adhesive film is introduced into the end portion of the first tube, and the adhesive film is cured by heating, **characterized in that** an adhesive according to one or more of Claims 1 to 11 is used as an adhesive film.

## Revendications

1. Adhésif thermodurcissable sous forme de bande ou de feuille ayant une épaisseur dans la plage de 0,1 à 5 mm pour l'assemblage de tubes, contenant
a) au moins un prépolymère époxyde réactif,
b) au moins un durcisseur latent pour époxydes ainsi que
c) un ou plusieurs élastomères,
**caractérisé en ce que** les élastomères sont choisis parmi :
des copolymères à blocs avec blocs polymères thermoplastiques choisis parmi des copolymères ayant la structure de bloc suivante :
styrène-butadiène-(méth)acrylate,
styrène-butadiène-ester (méth)acrylique,
éthylène-ester (méth)acrylique-ester glycidyl(méth)acrylique,
éthylène-ester (méth)acrylique-anhydride maléique,
méthylméthacrylate-butylacrylate-méthylméthacrylate,
une résine époxydique solide à 22°C avec groupes époxyde réactifs étant présente au moins partiellement en tant que composant a).

2. Adhésif selon la revendication 1, **caractérisé en ce qu'**il contient un polyuréthane thermoplastique non réactif en tant qu'autre élastomère.

3. Adhésif selon la revendication 2, **caractérisé en ce que** le polyuréthane thermoplastique non réactif remplit au moins une des conditions suivantes :
i) il est solide à 22°C et présente une température de transition vitreuse inférieure à -20°C, de préférence inférieure à -25°C ;
ii) il est solide à 22°C et présente un domaine de fusion ou un domaine de ramollissement selon Kofler qui commence au-dessus de 100°C, de préférence au-dessus de 115°C ;
iii) il est solide à 22°C et présente sous forme de substance pure un allongement à la rupture d'au moins 300 %, de préférence d'au moins 400 %.

4. Adhésif selon l'une quelconque des revendications 1 à 3, **caractérisé en ce qu'**il contient, en tant que copolymère à blocs avec blocs polymères thermoplastiques, un copolymère à blocs qui est choisi parmi ceux qui contiennent un premier bloc polymère avec une température de transition vitreuse inférieure à 15°C et un second bloc polymère avec une température de transition vitreuse supérieure à 25°C.

5. Adhésif selon l'une quelconque des revendications 1 à 4, **caractérisé en ce qu'**il contient de manière supplémentaire
d) des particules de caoutchouc.

6. Adhésif selon l'une quelconque des revendications 1 à 5, **caractérisé en ce qu'**il contient de manière supplémentaire
e) des particules minérales,
qui présentent une coque constituée de polymères organiques.

7. Adhésif selon l'une quelconque des revendications 1 à 6, **caractérisé en ce qu'**il contient de manière supplémentaire
f) au moins un agent expansif.

8. Adhésif selon l'une quelconque des revendications 1 à 7, **caractérisé en ce qu'**il contient de manière supplémentaire
g) de la poudre métallique.

9. Adhésif selon l'une quelconque des revendications 1 à 8, **caractérisé en ce qu'**il peut être plié ou enroulé à l'état non durci à 22°C et peut être allongé jusqu'à au moins 100 % avant de se rompre.

10. Adhésif selon l'une quelconque des revendications 1 à 9, **caractérisé en ce qu'**il est monté sur un support, de préférence en métal.

11. Utilisation d'un adhésif selon l'une quelconque des revendications 1 à 10 pour le collage d'éléments de construction tubulaires, de préférence des éléments de construction en métal, bois, céramique ou ferrite.

12. Procédé de raccordement de tubes, dans lequel un premier tube présente une section terminale pouvant accueillir une section terminale d'un second tube, un film adhésif est appliqué sur la section terminale du second tube, la section terminale du second tube avec le film adhésif appliqué est introduite dans la section terminale du premier tube et le film adhésif est durci par chauffage, **caractérisé en ce qu'**un adhésif selon l'une quelconque des revendications 1 à 11 est utilisé en tant que film adhésif.
